# EUROPEAN PATENT APPLICATION

(11) **EP 4 549 128 A1**
(43) Date of publication of application: **07.05.2025**
(21) Application number: 23830870.4
(22) Date of filing: 17.05.2023
(51) Int. Cl.: B29C 48/92, B29C 48/08, B29C 48/21, B29C 48/25, B29C 48/305, B29C 48/395, B29C 48/49, B29C 48/88, B29C 55/02, B29C 55/18, H01M 4/64, H01M 4/66, B29L 9/00

(54) **BATTERY MATERIAL PRODUCTION DEVICE, BATTERY MATERIAL PRODUCTION SYSTEM, AND BATTERY MATERIAL PRODUCTION METHOD**

(30) Priority: 01.07.2022 JP 2022106875; 26.10.2022 JP 2022171491; 27.12.2022 JP 2022209379
(71) Applicant: The Japan Steel Works, Ltd., Tokyo 141-0032 (JP)
(72) Inventor: UEDA, Naoki, Tokyo 141-0032 (JP); NAKAMURA, Satoru, Tokyo 141-0032 (JP); FURUKI, Kenichi, Tokyo 141-0032 (JP)
(74) Representative: Simmons & Simmons LLP (Munich)
(86) International application number: PCT/JP2023/018422
(87) International publication number: WO 2024/004418

(57) **Abstract**

The battery material production device (200) according to this disclosure has receiving ports (210), spreading parts (220), a joining part (230), and an output port (240). The receiving ports (210) each continuously receive a plurality of different compositions in fluid form. The spreading parts (220) guide each of the injected compositions in the output direction while spreading the compositions in a direction orthogonal to the output direction. The joining part (230) joins the plurality of compositions in layers and guides the product in the output direction. The output port (240) is a slit-shaped opening capable of continuously outputting as an output product the plurality of compositions that have been integrated by spreading and joining.

## Description

### Technical Field

The present invention relates to a battery material manufacturing apparatus, a battery material manufacturing system, and a battery material manufacturing method.

### Background Art

Recently, amid increasing demand for batteries in various scenes, the development of next-generation batteries has been advanced. As one of the next-generation batteries, for example, a technique of replacing metal of a current collector with resin or a technique of impregnating a predetermined polymer with an electrolyte solution has been proposed.

For example, Patent Literature 1 discloses a resin current collector for a lithium ion battery that has a conductive resin layer including matrix resin, a conductive filler, and a conductive filler dispersing agent.

Patent Literature 2 discloses a resin current collector for a positive electrode in which a conductive filler is dispersed in matrix resin including a predetermined polymer.

Patent Literature 3 discloses a negative electrode for a lithium ion battery including a current collector and a negative electrode composition layer disposed on the surface of the current collector and a manufacturing method for the same.

### Citation List

### Patent Literature

[Patent Literature 1] Japanese Unexamined Patent Application Publication No. 2021-068587
[Patent Literature 2] Japanese Unexamined Patent Application Publication No. 2021-118046
[Patent Literature 3] Japanese Unexamined Patent Application Publication No. 2021-125337

### Summary of Invention

### Technical Problem

However, it can hardly be said that the inventions of the aforementioned patent literatures have established means for mass-production of lithium ion batteries or battery materials.

The present disclosure has been made to solve such a problem, and provides a battery material manufacturing apparatus or the like capable of continuously, efficiently manufacturing a battery material.

### Solution to Problem

A battery material manufacturing apparatus according to the present disclosure includes: reception ports, spreading units, a coupling unit, and an output port. The reception ports respectively, continuously receive a plurality of compositions, which are different from each other, in a fluid form. The spreading units guide the compositions injected, in an output direction while spreading each of the compositions in an orthogonal direction relative to the output direction. The coupling unit couples the plurality of compositions in layers and guides the plurality of compositions in the output direction. The output port is a slit-shaped opening that can continuously output, as an output product, the plurality of compositions integrated by being subjected to spreading and coupling.

In a battery material manufacturing method according to the present disclosure, the battery material manufacturing apparatus performs the following processing. The battery material manufacturing apparatus respectively, continuously receives a plurality of compositions, which are different from each other, necessary for manufacturing at least a battery material. The battery material manufacturing apparatus guides the compositions injected, in an output direction while spreading each of the compositions in an orthogonal direction relative to the output direction. The battery material manufacturing apparatus couples the plurality of compositions in layers and guides the plurality of compositions in the output direction. The battery material manufacturing apparatus continuously outputs the plurality of compositions integrated by being subjected to spreading and coupling.

According to the present disclosure, it is possible to provide a battery material manufacturing apparatus or the like capable of continuously, efficiently manufacturing a battery material.

### Brief Description of Drawings

Fig. 1 is a configurational view of a battery according to Embodiment 1;
Fig. 2 is an overall configurational view of a battery material manufacturing system according to Embodiment 1;
Fig. 3 is a first cross-sectional view of a battery material manufacturing apparatus;
Fig. 4 is a second cross-sectional view of the battery material manufacturing apparatus;
Fig. 5 is a cross-sectional view showing a second example of the battery material manufacturing apparatus;
Fig. 6 is a view for explaining a configuration of a deaeration unit 500;
Fig. 7 is an overall configurational view of a battery material manufacturing system according to Embodiment 2; and
Fig. 8 is a configurational view of a battery material manufacturing system according to Embodiment 3.

### Description of Embodiments

Hereinafter, the present invention will be described using embodiments of the invention, but the invention according to the scope of claims is not limited to the following embodiments. Further, not all of the components described in the embodiments are essential as means for solving the problem. For clear explanation, the following descriptions and drawings are omitted and simplified, as appropriate. Note that in the drawings, the same elements are assigned the same reference signs and overlapping descriptions are omitted, as necessary.

### <Embodiment 1>

Hereinafter, with reference to the drawings, a battery material manufacturing system according to Embodiment 1 will be described. The battery material manufacturing system according to the present embodiment manufactures a material for manufacturing a predetermined battery. The predetermined battery is, for example, a lithium ion battery as a type of a semi-solid battery.

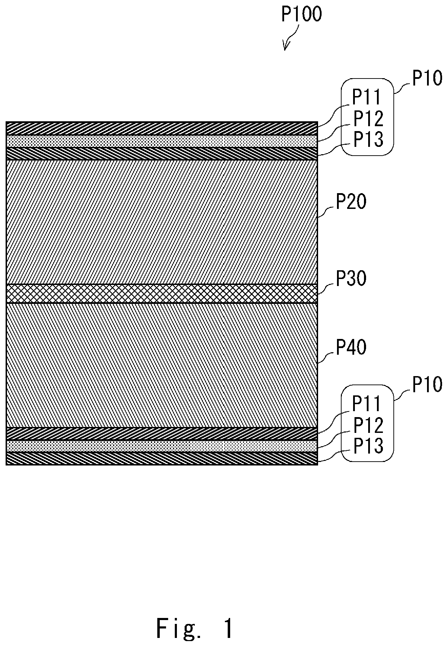

Fig. 1 is a configurational view of a battery according to Embodiment 1. In a battery P100 shown in Fig. 1, a current collector P10, a positive electrode layer P20, a separator P30, a negative electrode layer P40, and the current collector P10 are stacked in layers in this order from the top.

In the current collector P10, a negative electrode current collector P11, a current collecting substrate P12, and a positive electrode current collector P13 are stacked in layers in this order from the top.

The negative electrode current collector P11 includes, as main components, matrix resin and a conductive filler dispersed in the matrix resin. The matrix resin is, for example, PP (polypropylene), PMMA (acrylic resin), or PVC (polyvinyl chloride). The conductive filler is, for example, a conductive powder material, such as titanium powder, nickel powder, aluminum powder, or carbon black. The conductive filler may be, for example, a conductive fiber material, such as a carbon nanotube, graphene, or a metal nanowire, without being limited to those mentioned above. The negative electrode current collector P11 may include a dispersing agent. The dispersing agent is not particularly limited to any component or composition as long as it is resin that can be formed into a film or a sheet shape. The dispersing agent may be, for example, a copolymer of PP and PE (polyethylene).

Of the aforementioned components, as for the powder material as the conductive filler, it is preferable that for example, the particle size be 10 micrometers or greater and 500 micrometers or smaller and the mass percent be 20 percent or greater and 70 percent or smaller. The conductive filler may form secondary particles. The secondary particles are agglomerated particles formed such that primary particles of 1 nanometer or greater and less than 10 micrometers are agglomerated (clustered). The shape of the secondary particles is not necessarily a spherical shape or a block shape closer to a spherical shape, and may be a shape in a string of beads or have a bifurcately branched portion.

Further, as for the fiber material as the conductive filler, it is preferable that for example, the fiber diameter be 1 nanometer or greater and 500 nanometers or smaller, the fiber length be 1 micrometer or greater and 500 micrometers or smaller, and the mass percent be 20 percent or greater and 70 percent or smaller.

Note that the particle size can be favorably measured using a particle size distribution measuring apparatus utilizing diffraction and scattering of laser light. That is, the particle size may be the average of the particle size distribution in the measurement by the particle size distribution measuring apparatus. Further, the fiber diameter and the fiber length can also be measured using the aforementioned particle size distribution measuring apparatus. In this case, since the particle size distribution pattern obtained through the measurement has a plurality of peaks, the peak on a smaller side in size may be set as the fiber diameter and the peak on a greater side in size may be set as the fiber length.

The current collecting substrate P12 is provided between the negative electrode current collector P11 and the positive electrode current collector P13. The current collecting substrate P12 includes, for example, PP, a copolymer of PP and PE, carbon black, and graphite.

The positive electrode current collector P13 includes, as main components, matrix resin and a conductive filler dispersed in the matrix resin. The matrix resin is, for example, PP. Further, the conductive filler is, for example, carbon powder and a carbon fiber. The carbon powder is not limited to any form as long as it is a powder material including carbon as the main component. That is, the carbon powder may be graphite or carbon black. In addition, the carbon fiber is not limited to any form as long as it is a fiber material including carbon as the main component. In other words, the carbon fiber may be a carbon nanotube or graphene. Further, the positive electrode current collector P13 may include a dispersing agent. The dispersing agent is, for example, a copolymer of PP and PE.

Of the aforementioned components, as for the powder material as the conductive filler, it is preferable that for example, the particle size be 10 micrometers or greater and 500 micrometers or smaller and the mass percent be 20 percent or greater and 70 percent or smaller. The conductive filler may form secondary particles. The secondary particles are agglomerated particles formed such that primary particles of 1 nanometer or greater and less than 10 micrometers are agglomerated (clustered). The shape of the secondary particles is not necessarily a spherical shape or a block shape closer to a spherical shape, and may be a shape in a string of beads or have a bifurcately branched portion.

Further, as for the fiber material as the conductive filler, it is preferable that for example, the fiber diameter be 1 nanometer or greater and 500 nanometers or smaller, the fiber length be 1 micrometer or greater and 500 micrometers or smaller, and the mass percent be 20 percent or greater and 70 percent or smaller. In the current collector P10 on a positive electrode side, the negative electrode current collector P11 is disposed on the opposite side, and the positive electrode current collector P13 contacts the positive electrode layer P20.

The positive electrode layer P20 is provided between the positive electrode current collector P13 and the separator P30. The positive electrode layer P20 includes a gel-like polymeric compound, a positive electrode active material, and a conductive filler. The gel-like polymeric compound may be conductive resin.

The separator P30 is provided between the positive electrode layer P20 and the negative electrode layer P40. The separator P30 is, for example, a polyolefin (PO) microporous membrane.

The negative electrode layer P40 is provided between the separator P30 and the negative electrode current collector P11. The negative electrode layer P40 includes a gel-like polymeric compound, negative electrode active material particles, and a conductive filler. The gel-like polymeric compound may be conductive resin.

On a side opposite to a side where the negative electrode layer P40 contacts the separator P30, the current collector P10 is disposed. In the current collector P10 on a negative electrode side, the negative electrode current collector P11 contacts the negative electrode layer P40 and on the opposite side, the positive electrode current collector P13 is disposed.

The configuration of the battery P100 according to the present embodiment has been described above, and the battery P100 may include a structural material or the like for maintaining the form of the battery P100 in addition to the aforementioned components. Further, the battery P100 may be configured such that a plurality of batteries P100 are stacked in layers.

In the aforementioned battery P100, the current collector P10 can be manufactured as follows, for example. That is, the manufacturer first forms the current collecting substrate P12. Then, the manufacturer applies the negative electrode current collector P11 on one side of the formed current collecting substrate P12 and dries the negative electrode current collector P11. Further, the manufacturer applies the positive electrode current collector P13 on the other side of the current collecting substrate P12 and dries the positive electrode current collector P13. In this manner, the manufacturer of the current collector P10 can process each layer through batch processing. However, since the compositions constituting the current collector P10 have a high viscosity, the aforementioned method fails to stabilize the quality and is not suitable as a manufacturing method for mass-production in terms of yields. Further, since application processing involves a large number of production processes, it is difficult to reduce manufacturing cost in terms of a lead time (process time). Therefore, an efficient mass-production method for the current collector P10 is desired.

Meanwhile, for example, when a polyethylene resin film is manufactured, a resin material heated and kneaded by an extruder is formed by being spread using a T-die method in some cases. Thus, for example, if the aforementioned current collector P10 can be manufactured using the T-die method, continuous manufacturing becomes available. However, unlike the case in which the resin film is formed using the T-die method, the current collector P10 includes a predetermined percentage of conductive filler. Therefore, when the T-die method is used, the composition including the conductive filler needs to be favorably formed. Specifically, the current collector P10 is, for example, required to have the conductive filler favorably dispersed in the matrix resin and to be homogenous.

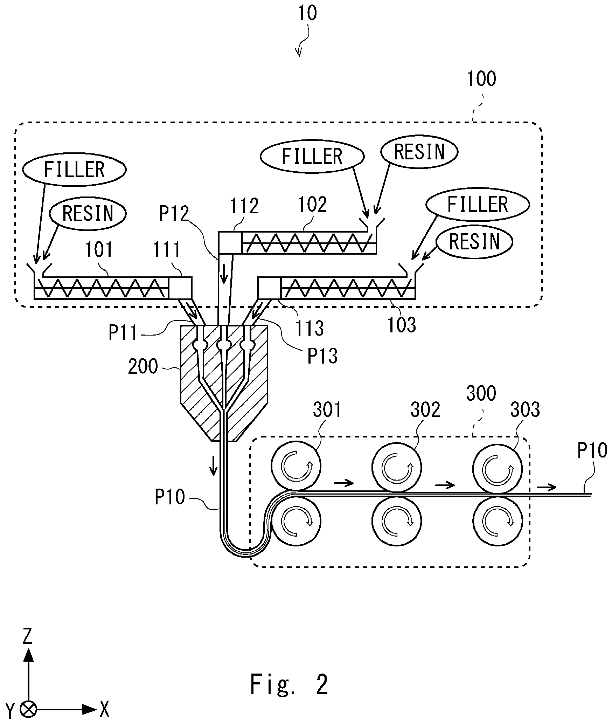

Next, with reference to Fig. 2, a battery material manufacturing system 10 will be described. Fig. 2 is an overall configurational view of the battery material manufacturing system 10 according to Embodiment 1. The battery material manufacturing system 10 shown in Fig. 2 is a schematic illustration of the components for easier understanding. The battery material manufacturing system 10 shown in the drawing manufactures the aforementioned current collector P10. That is, the battery material manufacturing system 10 simultaneously, continuously forms the negative electrode current collector P11, the current collecting substrate P12, and the positive electrode current collector P13. The battery material manufacturing system 10 includes, as main components, a raw material input block 100, a battery material manufacturing apparatus 200, and a rolling block 300.

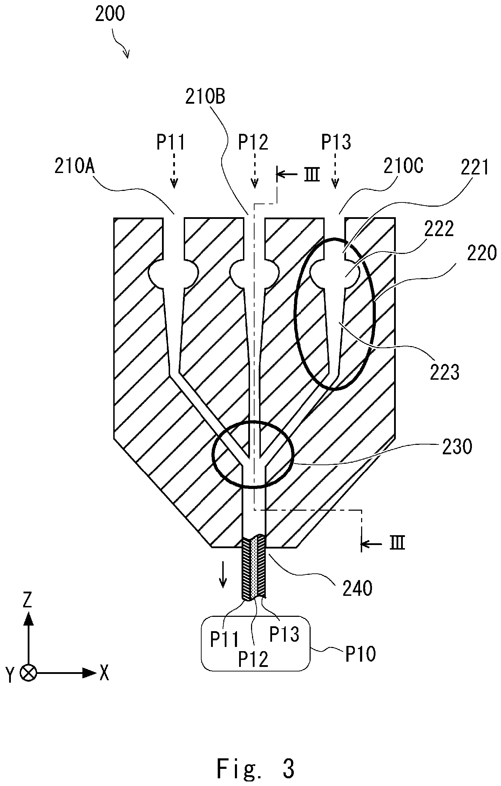

Note that as a matter of convenience for explanation of positional relations among the constituent elements, a right handed orthogonal coordinate system is attached to Fig. 2. Further, in Fig. 3 and the following drawings, when the orthogonal coordinate system is attached, X-axis, Y-axis, and Z-axis directions in Fig. 2 and X-axis, Y-axis, and Z-axis directions of the orthogonal coordinate system in those drawings respectively correspond.

The raw material input block 100 receives raw materials of compositions for forming layers constituting the current collector P10 and performs predetermined processing on the received raw materials, and then feeds the raw materials to the battery material manufacturing apparatus 200. The raw material input block 100 includes, as main components, a first extrusion apparatus 101, a second extrusion apparatus 102, and a third extrusion apparatus 103.

The first extrusion apparatus 101 receives, for example, predetermined resin and filler as raw materials for the negative electrode current collector P11. The first extrusion apparatus 101 kneads the received raw materials and feeds the composition for forming the negative electrode current collector P11 to the battery material manufacturing apparatus 200 via a first output part 111. The first extrusion apparatus 101 is, for example, a twin screw extruder. Further, the first output part 111 is, for example, a gear pump. With such a configuration, the first extrusion apparatus 101 can favorably knead the raw materials and feed (pump) the composition for the negative electrode current collector P11 to the battery material manufacturing apparatus 200 with a predetermined pressure.

The second extrusion apparatus 102 receives, for example, predetermined resin and filler as raw materials for the current collecting substrate P12. The second extrusion apparatus 102 kneads the received raw materials and feeds the composition for forming the current collecting substrate P12 to the battery material manufacturing apparatus 200 via a second output part 112. The second extrusion apparatus 102 is, for example, a twin screw extruder. Further, the second output part 112 is, for example, a gear pump. With such a configuration, the second extrusion apparatus 102 can favorably knead the raw materials and feed the composition for the current collecting substrate P12 to the battery material manufacturing apparatus 200 with a predetermined pressure.

The third extrusion apparatus 103 receives, for example, predetermined resin and filler as raw materials for the positive electrode current collector P13. The third extrusion apparatus 103 kneads the received raw materials and feeds the composition for forming the positive electrode current collector P13 to the battery material manufacturing apparatus 200 via a third output part 113. The third extrusion apparatus 103 is, for example, a twin screw extruder. Further, the third output part 113 is, for example, a gear pump. With such a configuration, the third extrusion apparatus 103 can favorably knead the raw materials and feed the composition for the positive electrode current collector P13 to the battery material manufacturing apparatus 200 with a predetermined pressure.

The battery material manufacturing apparatus 200 receives a plurality of compositions from the raw material input block 100, and continuously outputs a sheet-shaped molded product in which the received compositions are coupled in layers. The battery material manufacturing apparatus 200 includes a so-called T-die. Note that the details of the battery material manufacturing apparatus 200 will be described later. The battery material manufacturing apparatus 200 outputs the current collector P10 in which the negative electrode current collector P11, the current collecting substrate P12, and the positive electrode current collector P13 are formed in layers. At this time, the thickness of the current collector P10 output from an output port 240 is around 20 micrometers to 150 micrometers. A thinner current collector P10 in thickness is more preferable.

The rolling block 300 includes, as main components, a first rolling apparatus 301, a second rolling apparatus 302, and a third rolling apparatus 303. The rolling block 300 receives the current collector P10 output from the battery material manufacturing apparatus 200, and rolls the received current collector P10 at the first rolling apparatus 301. The first rolling apparatus 301 sandwiches the front and back of the current collector P10 using a rolling roller and outputs the current collector P10 while compressing it.

The first rolling apparatus 301 feeds the rolled current collector P10 to the second rolling apparatus 302. The second rolling apparatus 302 further rolls the current collector P10 output from the first rolling apparatus 301 and feeds the rolled current collector P10 to the third rolling apparatus 303. The third rolling apparatus 303 further rolls the current collector P10 output from the second rolling apparatus 302 and outputs the current collector P10 to the subsequent process.

At this time, when an output speed (first output speed) at which the first rolling apparatus 301 outputs the current collector P10 and an output speed (second output speed) at which the second rolling apparatus 302 in a process subsequent to the process of the first rolling apparatus 301 outputs the current collector P10 are compared, the second output speed is faster than the first output speed. In other words, when the diameter of the rolling roller of the first rolling apparatus 301 and the diameter of the rolling roller of the second rolling apparatus 302 are equivalent, the rotating speed of the second rolling apparatus 302 is faster than the rotating speed of the first rolling apparatus 301. Likewise, when the output speed (second output speed) at which the second rolling apparatus 302 outputs the current collector P10 and an output speed (third output speed) at which the third rolling apparatus 303 in a process subsequent to the process of the second rolling apparatus 302 outputs the current collector P10 are compared, the third output speed is faster than the second output speed. In other words, when the diameter of the rolling roller of the second rolling apparatus 302 and the diameter of the rolling roller of the third rolling apparatus 303 are equivalent, the rotating speed of the third rolling apparatus 303 is faster than the rotating speed of the second rolling apparatus 302.

By individually controlling the speed of each rolling apparatus of the rolling block 300 in such a manner, the rolling block 300 can superpose the pressing and expanding force relative to the thickness direction of the current collector P10 and the stretching force relative to the output direction of the current collector P10. Therefore, with the use of the rolling block 300, the current collector P10 can be quickly processed to be thinner. As a result, the productivity of the battery material manufacturing system 10 can be improved.

The rolling block 300 may further include a heating apparatus in addition to the aforementioned components. Further, the rolling block 300 only needs to include one or more rolling apparatuses. The rolling block 300 rolls the current collector P10 received from the battery material manufacturing apparatus 200 such that the current collector P10 has a thickness of, for example, around 500 micrometers to 50 micrometers.

The battery material manufacturing system 10 has been described above. The battery material manufacturing system 10 may further include a process of cutting the current collector P10 in the post-process of the rolling block 300. Alternatively, the battery material manufacturing system 10 may further include means for reeling the battery material manufacturing system 10 in the post-process of the rolling block 300.

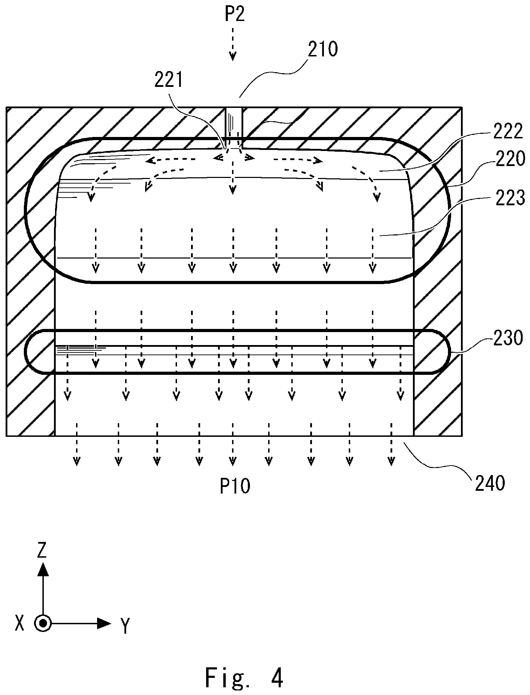

Next, with reference to Fig. 3 and Fig. 4, the battery material manufacturing apparatus 200 will be further described. Fig. 3 is a first cross-sectional view of the battery material manufacturing apparatus 200. Fig. 4 is a second cross-sectional view of the battery material manufacturing apparatus. The cross-sectional view shown in Fig. 4 is illustration of a cross-section III-III shown in Fig. 3. The battery material manufacturing apparatus 200 includes, as main components, reception ports 210, spreading units 220, a coupling unit 230, and an output port 240.

The reception ports 210 respectively, continuously receive a plurality of compositions, which are different from each other, in a fluid form including a thermoplastic polymer and a conductive filler. The battery material manufacturing apparatus 200 shown in Fig. 3 includes, as the reception ports 210, a first reception port 210A, a second reception port 210B, and a third reception port 210C. The first reception port 210A receives the negative electrode current collector P11. The second reception port 210B receives the current collecting substrate P12. The third reception port 210C receives the positive electrode current collector P13. The first reception port 210A, the second reception port 210B, and the third reception port 210C each receive a composition including a conductive filler having a size of 500 micrometers or smaller and a mass percent of 20 percent or greater and 70 percent or smaller. The size of the conductive filler is either the particle size or the fiber length of the conductive filler.

The spreading units 220 guide the compositions injected from the respective reception ports 210, in the output direction (that is, a negative direction of the Z-axis in the drawing) while spreading the compositions in the orthogonal direction (that is, the Y-axis direction) relative to the output direction. The spreading units 220 each include a manifold unit 222 and a guiding unit 223.

The manifold units 222 are spaces, each stretching bifurcately in the orthogonal direction (a positive direction of the Y-axis and a negative direction of the Y-axis in Fig. 4) from each of connecting units 221 respectively connecting to the reception ports 210. The guiding units 223 are slit-shaped spaces, each being formed in the output direction from each of the manifold units 222. The spreading units 220 stretch the compositions in the aforementioned orthogonal direction by means of the manifold units 222 and guide the compositions from that point to the guiding units 223 to process the compositions into a desired shape.

The coupling unit 230 couples, in layers, the plurality of compositions guided from the spreading units 220 in the output direction. Then, the coupling unit 230 guides, in the output direction, the compositions coupled in layers.

The output port 240 is a slit-shaped opening that can continuously output, as an output product, the plurality of compositions integrated by being subjected to spreading and coupling. As shown in Fig. 3, in the current collector P10 output from the output port 240, the negative electrode current collector P11, the current collecting substrate P12, and the positive electrode current collector P13 are formed in layers and in a sheet shape.

Note that the battery material manufacturing apparatus 200 may include a temperature control apparatus in addition to the aforementioned components. Thus, the battery material manufacturing apparatus 200 can suppress the unevenness of the compositions by appropriately adjusting the temperature and the output pressure of each of the negative electrode current collector P11, the current collecting substrate P12, and the positive electrode current collector P13.

The battery material manufacturing system 10 has been described above, but the battery material manufacturing system 10 is not limited to the aforementioned configuration. For example, the raw material input block 100 may include four or more extrusion apparatuses. In this case, the battery material manufacturing apparatus 200 includes the reception ports 210 corresponding in number to the extrusion apparatuses, and stacks the compositions in layers and outputs them from the output port 240.

The rolling block 300 only needs to include one or more rolling apparatuses and may include four or more rolling apparatuses. The rolling block 300 may concurrently include a heating apparatus in each rolling apparatus. The rolling block 300 rolls the current collector P10 while controlling its temperature, so that the current collector P10 can be rolled while the function of the conductive filler is maintained.

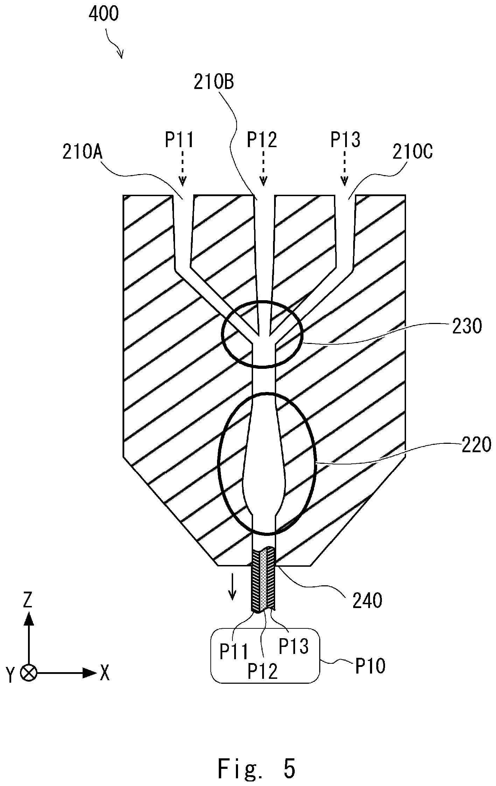

Fig. 5 is a cross-sectional view showing a second example of the battery material manufacturing apparatus. Fig. 5 shows a battery material manufacturing apparatus 400. The battery material manufacturing system 10 may include the battery material manufacturing apparatus 400 in place of the battery material manufacturing apparatus 200.

The battery material manufacturing apparatus 400 differs from the battery material manufacturing apparatus 200 in the positional relation between the coupling unit 230 and the spreading units 220. That is, as shown in Fig. 5, the battery material manufacturing apparatus 400 couples the plurality of compositions injected from the respective reception ports 210 in layers at the coupling unit 230. Then, the coupling unit 230 outputs the compositions coupled in layers to the spreading unit 220. Note that a region including the coupling unit 230 may be referred to as a feeding block. The feeding block may be configured in such an aspect in which the coupling unit 230 is replaceable.

The spreading unit 220 guides, in the output direction, the compositions coupled in layers that are fed from the coupling unit 230 while spreading the compositions in the orthogonal direction relative to the output direction. The spreading unit 220 outputs the spread compositions to the output port 240. Note that the spreading unit 220 may be configured so as to include the manifold unit 222 and the guiding unit 223.

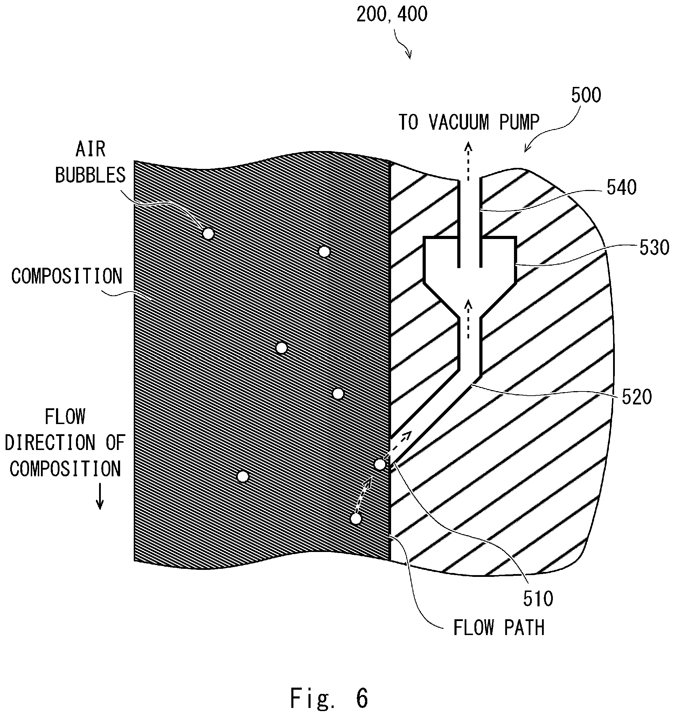

Next, Fig. 6 will be described. A battery material that the battery material manufacturing system 10 manufactures has a predetermined viscosity (for example, around 1,000 millipascal-seconds to 100,000 pascal-seconds) due to the property of the compositions. Further, the compositions are in a state kneaded by the extrusion apparatus. Therefore, there is a possibility that the compositions injected into the battery material manufacturing apparatus 200 or the battery material manufacturing apparatus 400 contain gas such as air. Thus, the battery material manufacturing apparatus 200 or the battery material manufacturing apparatus 400 includes a deaeration unit 500 shown in Fig. 6 so as to remove the gas contained in the compositions.

Fig. 6 is a view for explaining a configuration of the deaeration unit 500. The deaeration unit 500 includes, as main components, a branch unit 510, a branch pipe 520, a reserving unit 530, and an outlet pipe 540.

The branch unit 510 is a flow path provided in a flow path of the compositions in the battery material manufacturing apparatus 200 or the battery material manufacturing apparatus 400. The purpose of the branch unit 510 is to extract the gas such as air bubbles contained in the compositions. Therefore, the branch unit 510 can be provided in a plurality of sites of the battery material manufacturing apparatus 200 or the battery material manufacturing apparatus 400.

The branch pipe 520 is a pipe for guiding at least the gas contained in the compositions from the branch unit 510. Therefore, the flow path cross-sectional area of the branch pipe 520 is sufficiently smaller as compared to that of the flow path of the compositions.

The reserving unit 530 is connected to the branch pipe 520 and is provided above relative to the branch unit 510, and is a predetermined space having a flow path cross-sectional area greater than the flow path cross-sectional area of the branch pipe 520. With such a configuration, even if the compositions themselves flow into the branch pipe 520 from the branch unit 510, the deaeration unit 500 can suppress the compositions reversely flowing further from the reserving unit 530.

The outlet pipe 540 guides the gas accumulated in the reserving unit 530 to the outside of the battery material manufacturing apparatus 200 or the battery material manufacturing apparatus 400. The outlet pipe 540 is, for example, connected to a vacuum pump. Thus, the deaeration unit 500 suctions the gas contained in the compositions. Note that the vacuum pump may be connected to a plurality of outlet pipes 540. The reserving unit 530 may be connected to a plurality of branch pipes 520. With such a configuration, the battery material manufacturing system 10 can suppress generation of air bubbles in the battery material.

The battery material manufacturing system 10 described above can simultaneously and continuously form two or more different battery materials. Further, the battery material manufacturing system 10 forms the two or more battery materials while controlling the pressure in manufacturing. As a result, the battery material manufacturing system 10 can continuously form a homogeneous battery material. Therefore, according to Embodiment 1, the battery material manufacturing apparatus or the like capable of continuously, efficiently manufacturing the battery material can be provided.

### <Embodiment 2>

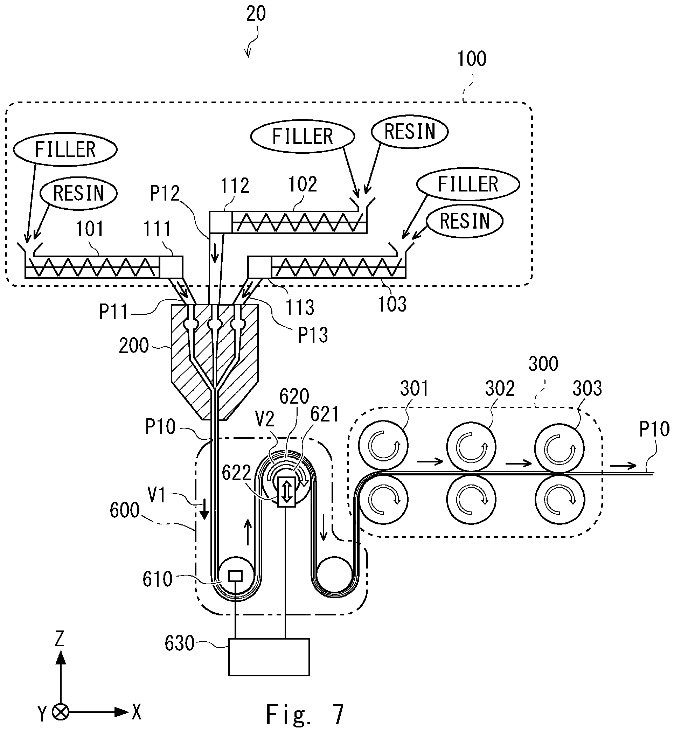

Next, with reference to Fig. 7, Embodiment 2 will be described. Fig. 7 is an overall configurational view of a battery material manufacturing system according to Embodiment 2. A battery material manufacturing system 20 shown in Fig. 7 differs from Embodiment 1 in that it includes a stretching apparatus 600.

The stretching apparatus 600 stretches the current collector P10 as an output product output from the battery material manufacturing apparatus 200. Further, the stretching apparatus 600 feeds the stretched current collector P10 to the rolling block 300.

When the battery material is continuously manufactured, the current collector P10 output from the battery material manufacturing apparatus 200 is preferably thin. However, it is difficult to form the compositions including the filler to be thin using only the T-die that is a constituent element of the battery material manufacturing apparatus 200. Thus, the battery material manufacturing system 10 according to Embodiment 1 includes the rolling block 300 in the post-process of the battery material manufacturing apparatus 200. With the use of the rolling block 300, the battery material manufacturing system 10 can process the current collector P10 to be thin. However, when a thick current collector P10 is fed to the rolling block 300, the unevenness in thickness of the current collector P10 could be caused or the filler dispersed inside the current collector P10 could be unevenly present. To prevent these, it is necessary to increase the number of rolling apparatuses constituting the rolling block 300. More specifically, to make the 1 mm-thick current collector P10 thinner so as to have 0.05 mm in thickness, the rolling block 300 requires, for example, four or more rolling apparatuses. Thus, in the present embodiment, the stretching apparatus 600 is provided between the battery material manufacturing apparatus 200 and the rolling block 300. The stretching apparatus 600 includes, as main components, a tension sensor 610, a stretching roller 620, a rotationally driving unit 621, a displacement driving unit 622, and a drive control unit 630.

Thus, the number of rolling apparatuses that constitute the rolling block 300 can be reduced. More specifically, with the use of the stretching apparatus 600, the 1 mm-thick current collector P10 is made to have 0.5 mm in thickness, so that the number of rolling apparatuses constituting the rolling block 300 becomes, for example, three or smaller to further make the thickness of the current collector P10 thinner from 0.5 mm to 0.05 mm by means of the rolling block 300.

The tension sensor 610 measures tension that the current collector P10 as an output product receives. More specifically, the tension sensor 610 is interposed between the output port 240 of the battery material manufacturing apparatus 200 and the stretching roller 620, and measures, as the tension, the force in the pulling direction exerted on the current collector P10. For example, the tension sensor 610 shown in Fig. 7 includes a driven roller between the output port 240 and the stretching roller 620, and measures the force in the radial direction that the driven roller receives. The tension sensor 610 provides data on the measured tension to the drive control unit 630.

The stretching roller 620 is a roller configured to pull and reel out the output product in a sheet shape output from the output port at a first speed V1. The rotation of the stretching roller 620 is driven by the rotationally driving unit 621. Further, the position of the stretching roller 620 is set by the displacement driving unit 622.

The rotationally driving unit 621 drives the stretching roller 620 so as to output the current collector P10 as an output product in the output direction at a second speed V2 faster than the first speed V1. The rotationally driving unit 621 includes a motor, a speed reducer, and the like that are rotationally driven upon reception of a control signal from the drive control unit 630.

The displacement driving unit 622 displaces the stretching roller 620. More specifically, the displacement driving unit 622 includes, for example, a linear rail, a bearing that engages the linear rail to support the stretching roller 620, and a motor that drives the bearing along the linear rail. The displacement driving unit 622 displaces the stretching roller 620 upon reception of a control signal from the drive control unit 630.

The drive control unit 630 includes a drive circuit that drives each of the rotationally driving unit 621 and the displacement driving unit 622, and an operation circuit that drives each of the rotationally driving unit 621 and the displacement driving unit 622 in accordance with data on the tension received from the tension sensor 610. The drive control unit 630 adjusts the rotating speed of the stretching roller 620 in accordance with the tension. Further, the drive control unit 630 causes the displacement driving unit 622 to displace the stretching roller in accordance with the tension. In this manner, the stretching apparatus 600 stretches the current collector P10 while suppressing the tension excessively exerted on the current collector P10.

Embodiment 2 has been described above. The rolling block 300 and the stretching apparatus 600 preferably include a temperature control unit so as to be able to heat the current collector P10. In this manner, the current collector P10 containing the filler can be softened to be favorably made thinner. In simultaneously and continuously forming two or more different battery materials, the battery material manufacturing system 20 described above can suppress unevenness in the property of the current collector P10 while gradually thinning the battery materials. Therefore, according to Embodiment 2, the battery material manufacturing apparatus or the like capable of continuously, efficiently manufacturing the battery material can be provided.

### <Embodiment 3>

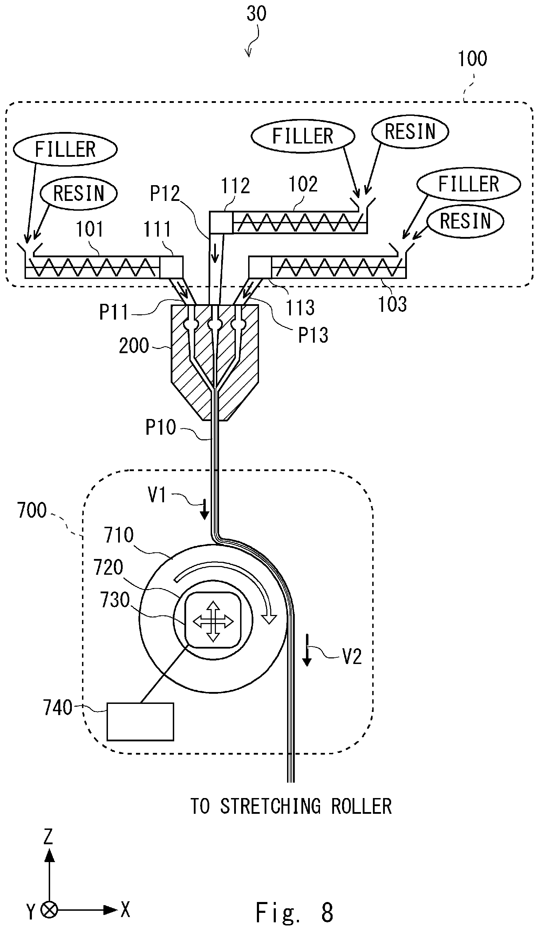

With reference to Fig. 8, Embodiment 3 will be described. Fig. 8 is a configurational view of a battery material manufacturing system 30 according to Embodiment 3. The battery material manufacturing system 30 differs from the aforementioned embodiments in that it includes a cast block 700. Note that the battery material manufacturing system 30 may include the rolling block 300 and the stretching apparatus 600 in a process after the process of the cast block 700, but the details will be omitted herein.

The cast block 700 is positioned below the battery material manufacturing apparatus 200, and stretches the current collector P10 output from the battery material manufacturing apparatus 200. The cast block 700 includes, as main components, a cast roller 710, a rotationally driving unit 720, a displacement driving unit 730, and a drive control unit 740.

The cast roller 710 is a roller rotated by the rotationally driving unit 720. The cast roller 710 receives the current collector P10 on the surface of the roller while rotating and outputs the current collector P10 to the next process. At this time, the speed on the surface of the cast roller 710 is the speed V2. Here, the speed V2 is set to be faster than the output speed V1 of the current collector P10 output from the battery material manufacturing apparatus 200. In this manner, the cast roller 710 can stretch the current collector P10. Further, the cast roller 710 contacts the current collector P10 so as to cool the current collector P10.

The rotationally driving unit 720 causes the cast roller 710 to rotate in accordance with an instruction of the drive control unit 740. The rotationally driving unit 720 includes a motor to cause the cast roller 710 to rotate, a sensor to measure the rotating speed of the cast roller 710, and the like.

The displacement driving unit 730 displaces the cast roller 710 in the Z-axis direction (that is, the up-down direction) in the drawing and the X-axis direction (that is, the horizontal direction, or the thickness direction of the current collector P10 that is output in a sheet shape) in the drawing. More specifically, the displacement driving unit 730 includes, for example, a linear rail movable along each of the Z-axis direction and the X-axis direction, a bearing that engages the linear rail to support the cast roller 710, and a motor that drives the bearing along the linear rail. The displacement driving unit 730 displaces the cast roller 710 upon reception of a control signal from the drive control unit 740.

The drive control unit 740 includes a drive circuit that drives each of the rotationally driving unit 720 and the displacement driving unit 730, and an operation circuit that drives each of the rotationally driving unit 720 and the displacement driving unit 730 in accordance with data on the rotating speed of the cast roller 710 and the position of the cast roller 710 that are received from the rotationally driving unit 720 and the displacement driving unit 730.

With the aforementioned configuration, the cast block 700 stretches the high-temperature and fluid current collector P10 output from the battery material manufacturing apparatus 200 while cooling it. In general, when the resin is formed and stretched into a film shape, the resin in a solidified form is stretched. However, when the sheet-shaped current collector P10 containing a filler is stretched in a solidified state, particularly in a case where the sheet is thick having, for example, 1 mm as in the sheet immediately after being output from the spreading unit 220, the sheet could break or unevenness in thickness could be generated in the sheet in stretching by the stretching apparatus 600. To prevent this, the stretching apparatus 600 needs to perform stretching at a relatively low speed. Thus, with the aforementioned configuration, by performing stretching of a slight amount in a melted state, the battery material manufacturing system 30 can quickly, widely, and uniformly make the sheet-shaped current collector P10 containing the filler thinner.

For example, with the aforementioned configuration, the cast block 700 stretches the 1 mm-thick current collector P10 so as to have 0.85 mm in thickness. In other words, the cast block 700 stretches the current collector P10 by 0.15 mm in thickness. Here, the thickness in stretching by the cast block 700 is not particularly limited, but is preferably smaller than the thickness in stretching by the stretching apparatus 600. That is, the thickness in stretching of the current collector P10 by the stretching apparatus 600 is, for example, 0.35 mm, while the thickness in stretching of the current collector P10 by the cast block 700 is 0.15 mm. Note that the cast block 700 stretches the current collector P10 at a relatively low temperature as compared to the temperature of the current collector P10 output from the output port 240. The cast block 700 may include a temperature control unit for adjusting the temperature of the current collector P10.

Further, the cast block 700 can favorably adjust the conditions for stretching the current collector P10 by displacing the cast roller 710. Specifically, the cast block 700 adjusts the temperature of the current collector P10 contacting the cast roller 710 by adjusting the position in the up-down direction (Z-axis direction) of the cast roller 710. In this manner, the cast block 700 can adjust the degree of solidification of the current collector P10. Further, the cast block 700 adjusts the position of the cast roller 710 which the current collector P10 contacts by adjusting the position in the horizontal direction (X-axis direction) of the cast roller 710. In this manner, the cast block 700 can adjust the degree of stretching of the current collector P10. Note that in the cast block 700, the position of the cast roller 710 may be changed in accordance with the compositions of the current collector P10.

Embodiment 3 has been described above. The cast block 700 of the battery material manufacturing system 30 includes the cast roller 710 configured to receive the current collector P10 as an output product in a sheet shape output from the output port at the first speed V1 and reels out the current collector P10 while winding it. Further, the cast block 700 includes a rotationally driving unit 720 configured to rotationally drive the cast roller 710 so as to output the output product in the output direction at the second speed V2 faster than the first speed V1.

Further, the cast block 700 further includes the displacement driving unit 730 configured to displace the cast roller 710 in the up-down direction and the horizontal direction. Furthermore, the drive control unit 740 of the cast block 700 displaces the cast roller 710 for the purpose of adjusting the degree of solidification and the degree of stretching of the output product.

Note that the current collector P10 stretched in the cast block 700 may be reheated in the stretching apparatus 600 or the rolling block 300 in the process after the process of the cast block 700. In this manner, the stretching apparatus 600 or the rolling block 300 can efficiently stretch the current collector P10. The temperature control unit described so far may have a function of controlling the temperature of the current collector P10 in accordance with the dimension in the thickness direction of the current collector P10. In other words, the battery material manufacturing system 30 has a function of measuring the dimension in the thickness direction of the current collector P10 and further, the temperature control unit in associating with a predetermined rolling function may set the temperature in accordance with the dimension in the thickness direction. With such a configuration, the battery material manufacturing system 30 can process the current collector P10 into a desired thickness.

As set forth above, according to Embodiment 3, it is possible to provide the battery material manufacturing apparatus or the like capable of continuously, efficiently manufacturing the battery material containing the filler while favorably adjusting the manufacturing conditions.

The present invention has been described above with reference to the embodiments, but the present invention is not limited to those described above. The details or the configurations of the present invention can be variously changed within the scope of the invention that a person skilled in the art can understand.

The present application claims priority from Japanese Patent Application No. 2022-106875 filed on July 1, 2022, Japanese Patent Application No. 2022-171491 filed on October 26, 2022, and Japanese Patent Application No. 2022-209379 filed on December 27, 2022, the entire contents of which are hereby incorporated into this application.

### Industrial Applicability

The present disclosure is applicable to a manufacturing system for, for example, a lithium ion battery as a type of a semi-solid battery and a battery material.

### Reference Signs List

- 10: BATTERY MATERIAL MANUFACTURING SYSTEM
- 20: BATTERY MATERIAL MANUFACTURING SYSTEM
- 30: BATTERY MATERIAL MANUFACTURING SYSTEM
- 100: RAW MATERIAL INPUT BLOCK
- 101: FIRST EXTRUSION APPARATUS
- 102: SECOND EXTRUSION APPARATUS
- 103: THIRD EXTRUSION APPARATUS
- 111: FIRST OUTPUT PART
- 112: SECOND OUTPUT PART
- 113: THIRD OUTPUT PART
- 200: BATTERY MATERIAL MANUFACTURING APPARATUS
- 210: RECEPTION PORT
- 220: SPREADING UNIT
- 221: CONNECTING UNIT
- 222: MANIFOLD UNIT
- 223: GUIDING UNIT
- 230: COUPLING UNIT
- 240: OUTPUT PORT
- 300: ROLLING BLOCK
- 301: FIRST ROLLING APPARATUS
- 302: SECOND ROLLING APPARATUS
- 303: THIRD ROLLING APPARATUS
- 400: BATTERY MATERIAL MANUFACTURING APPARATUS
- 500: DEAERATION UNIT
- 510: BRANCH UNIT
- 520: BRANCH PIPE
- 530: RESERVING UNIT
- 540: OUTLET PIPE
- 600: STRETCHING APPARATUS
- 610: TENSION SENSOR
- 620: STRETCHING ROLLER
- 621: ROTATIONALLY DRIVING UNIT
- 622: DISPLACEMENT DRIVING UNIT
- 630: DRIVE CONTROL UNIT
- 700: CAST BLOCK
- 710: CAST ROLLER
- 720: ROTATIONALLY DRIVING UNIT
- 730: DISPLACEMENT DRIVING UNIT
- 740: DRIVE CONTROL UNIT
- P10: CURRENT COLLECTOR
- P11: POSITIVE ELECTRODE CURRENT COLLECTOR
- P12: CURRENT COLLECTING SUBSTRATE
- P13: NEGATIVE ELECTRODE CURRENT COLLECTOR
- P20: POSITIVE ELECTRODE LAYER
- P30: SEPARATOR
- P40: NEGATIVE ELECTRODE LAYER
- P100: BATTERY

## Claims

1. A battery material manufacturing apparatus comprising:
reception ports configured to respectively, continuously receive a plurality of compositions, which are different from each other, in a fluid form;
spreading units configured to guide the compositions injected, in an output direction while spreading each of the compositions in an orthogonal direction relative to the output direction;
a coupling unit configured to couple the plurality of compositions in layers and guide the plurality of compositions in the output direction; and
an output port as a slit-shaped opening that can continuously output, as an output product, the plurality of compositions integrated by being subjected to spreading and coupling.

2. The battery material manufacturing apparatus according to claim 1, wherein the reception ports receive the compositions including a conductive filler.

3. The battery material manufacturing apparatus according to claim 2, wherein
the plurality of reception ports receive each of the compositions for forming a positive electrode current collector, a current collecting substrate, and a negative electrode current collector, and
the output port outputs the positive electrode current collector, the current collecting substrate, and the negative electrode current collector that are formed in layers.

4. The battery material manufacturing apparatus according to claim 3, wherein the output port outputs, in a sheet shape, the output product including a battery current collector.

5. The battery material manufacturing apparatus according to claim 4, further comprising a deaeration unit, the deaeration unit including:
a branch unit provided in a flow path of the compositions;
a branch pipe configured to guide at least gas contained in the compositions from the branch unit;
a reserving unit connected to the branch pipe and provided above the branch unit, the reserving unit being a predetermined space having a flow path cross-sectional area greater than a flow path cross-sectional area of the branch pipe; and
an outlet pipe configured to guide the gas accumulated in the reserving unit to an outside.

6. The battery material manufacturing apparatus according to any one of claims 1 to 5, wherein the spreading units comprise:
manifold units, each of the manifold units being a space stretching bifurcately in the orthogonal direction from each of connecting units respectively connecting to the reception ports; and
guiding units, each of the guiding units being a slit-shaped space formed in the output direction from each of the manifold units.

7. A battery material manufacturing system comprising:
the battery material manufacturing apparatus according to claim 1; and
an extruder configured to pump the compositions by controlling an output pressure for each of the reception ports.

8. The battery material manufacturing system according to claim 7, further comprising a rolling apparatus configured to roll the output product in a sheet shape output from the output port by sandwiching a front and a back of the output product.

9. The battery material manufacturing system according to claim 8, wherein the rolling apparatus comprises:
a first rolling apparatus configured to roll the output product at a first output speed; and
a second rolling apparatus configured to roll the output product output from the first rolling apparatus, at a second output speed faster than the first output speed.

10. The battery material manufacturing system according to any one of claims 7 to 9, further comprising a stretching apparatus, the stretching apparatus including:
a stretching roller configured to pull and reel out the output product in a sheet shape output from the output port at a first speed; and
a rotationally driving unit configured to rotationally drive the stretching roller so as to output the output product in the output direction at a second speed faster than the first speed.

11. The battery material manufacturing system according to claim 10, wherein the stretching apparatus further comprises:
a tension sensor configured to measure tension that the output product receives; and
a drive control unit configured to adjust a rotating speed of the stretching roller in accordance with the tension.

12. The battery material manufacturing system according to claim 11, wherein
the stretching apparatus further comprises a displacement driving unit configured to displace the stretching roller, and
the drive control unit adjusts the rotating speed of the stretching roller or displaces the stretching roller in accordance with the tension.

13. The battery material manufacturing system according to any one of claims 7 to 9, further comprising a cast block, the cast block including:
a cast roller configured to receive the output product in a sheet shape output from the output port at a first speed and reel out the output product while winding the output product; and
a rotationally driving unit configured to rotationally drive the cast roller so as to output the output product in the output direction at a second speed faster than the first speed.

14. The battery material manufacturing system according to claim 13, wherein the cast block further comprises:
a displacement driving unit configured to displace the cast roller in an up-down direction and a horizontal direction; and
a drive control unit configured to displace the cast roller for a purpose of adjusting a degree of solidification and a degree of stretching of the output product.

15. A battery material manufacturing method comprising:
continuously receiving each of a plurality of compositions, which are different from each other, in a fluid form including a thermoplastic polymer and a conductive filler;
guiding the compositions injected, in an output direction while spreading each of the compositions in an orthogonal direction relative to the output direction;
coupling the plurality of compositions in layers and guiding the plurality of compositions in the output direction; and
continuously outputting the plurality of compositions integrated by being subjected to spreading and coupling.

16. A battery material manufacturing apparatus comprising:
a plurality of reception ports configured to respectively, separately, continuously receive compositions in a fluid form having at least the same composition;
spreading units configured to guide the compositions injected, in an output direction while spreading each of the compositions in an orthogonal direction relative to the output direction;
a coupling unit configured to couple the plurality of compositions in layers and guide the plurality of compositions in the output direction; and
an output port as a slit-shaped opening that can continuously output, as an output product, the plurality of compositions integrated by being subjected to spreading and coupling,
wherein the battery material manufacturing apparatus further comprises a deaeration unit, the deaeration unit including:
a branch unit provided in a flow path of the compositions;
a branch pipe configured to guide at least gas contained in the compositions from the branch unit;
a reserving unit connected to the branch pipe and provided above the branch unit, the reserving unit being a predetermined space having a flow path cross-sectional area greater than a flow path cross-sectional area of the branch pipe; and
an outlet pipe configured to guide the gas accumulated in the reserving unit to an outside.

17. The battery material manufacturing apparatus according to claim 16, wherein the reception ports receive the compositions including a conductive filler.

18. The battery material manufacturing apparatus according to claim 17, wherein
the plurality of reception ports receive each of the compositions for forming a positive electrode current collector, a current collecting substrate, and a negative electrode current collector, and
the output port outputs the positive electrode current collector, the current collecting substrate, and the negative electrode current collector that are formed in layers.

19. The battery material manufacturing apparatus according to claim 18, wherein the output port outputs, in a sheet shape, the output product including a battery current collector.

20. The battery material manufacturing apparatus according to any one of claims 16 to 19, wherein the spreading units comprise:
manifold units, each of the manifold units being a space stretching bifurcately in the orthogonal direction from each of connecting units respectively connecting to the reception ports; and
guiding units, each of the guiding units being a slit-shaped space formed in the output direction from each of the manifold units.

21. A battery material manufacturing system comprising:
a battery material manufacturing apparatus including:
a plurality of reception ports configured to respectively, separately, continuously receive compositions in a fluid form having at least the same composition;
spreading units configured to guide the compositions injected, in an output direction while spreading each of the compositions in an orthogonal direction relative to the output direction;
a coupling unit configured to couple the plurality of compositions in layers and guide the plurality of compositions in the output direction; and
an output port as a slit-shaped opening that can continuously output, as an output product, the plurality of compositions integrated by being subjected to spreading and coupling; and
an extruder configured to pump the compositions by controlling an output pressure for each of the reception ports,
wherein the battery material manufacturing system further comprises a rolling apparatus configured to roll the output product in a sheet shape output from the output port by sandwiching a front and a back of the output product.

22. The battery material manufacturing system according to claim 21, wherein the rolling apparatus comprises:
a first rolling apparatus configured to roll the output product at a first output speed; and
a second rolling apparatus configured to roll the output product output from the first rolling apparatus, at a second output speed faster than the first output speed.

23. A battery material manufacturing system comprising:
a battery material manufacturing apparatus including:
a plurality of reception ports configured to respectively, separately, continuously receive compositions in a fluid form having at least the same composition;
spreading units configured to guide the compositions injected, in an output direction while spreading each of the compositions in an orthogonal direction relative to the output direction;
a coupling unit configured to couple the plurality of compositions in layers and guide the plurality of compositions in the output direction; and
an output port as a slit-shaped opening that can continuously output, as an output product, the plurality of compositions integrated by being subjected to spreading and coupling; and
an extruder configured to pump the compositions by controlling an output pressure for each of the reception ports,
wherein the battery material manufacturing system further comprises a stretching apparatus, the stretching apparatus including:
a stretching roller configured to pull and reel out the output product in a sheet shape output from the output port at a first speed; and
a rotationally driving unit configured to rotationally drive the stretching roller so as to output the output product in the output direction at a second speed faster than the first speed.

24. The battery material manufacturing system according to claim 23, wherein the stretching apparatus further comprises:
a tension sensor configured to measure tension that the output product receives; and
a drive control unit configured to adjust a rotating speed of the stretching roller in accordance with the tension.

25. The battery material manufacturing system according to claim 24, wherein
the stretching apparatus further comprises a displacement driving unit configured to displace the stretching roller, and
the drive control unit adjusts the rotating speed of the stretching roller or displaces the stretching roller in accordance with the tension.

26. A battery material manufacturing system comprising:
a battery material manufacturing apparatus including:
a plurality of reception ports configured to respectively, separately, continuously receive compositions in a fluid form having at least the same composition;
spreading units configured to guide the compositions injected, in an output direction while spreading each of the compositions in an orthogonal direction relative to the output direction;
a coupling unit configured to couple the plurality of compositions in layers and guide the plurality of compositions in the output direction; and
an output port as a slit-shaped opening that can continuously output, as an output product, the plurality of compositions integrated by being subjected to spreading and coupling; and
an extruder configured to pump the compositions by controlling an output pressure for each of the reception ports,
wherein the battery material manufacturing system further comprises a cast block, the cast block including:
a cast roller configured to receive the output product in a sheet shape output from the output port at a first speed and reels out the output product while winding the output product; and
a rotationally driving unit configured to rotationally drive the cast roller so as to output the output product in the output direction at a second speed faster than the first speed.

27. The battery material manufacturing system according to claim 26, wherein the cast block further comprises:
a displacement driving unit configured to displace the cast roller in an up-down direction and a horizontal direction; and
a drive control unit configured to displace the cast roller for a purpose of adjusting a degree of solidification and a degree of stretching of the output product.

28. A battery material manufacturing method comprising:
respectively, separately, continuously receiving a plurality of compositions in a fluid form, the compositions including each of a thermoplastic polymer and a conductive filler, as at least the same composition;
guiding the compositions injected, in an output direction while spreading each of the compositions in an orthogonal direction relative to the output direction;
coupling the plurality of compositions in layers and guiding the plurality of compositions in the output direction;
continuously outputting the plurality of compositions integrated by being subjected to spreading and coupling; and
guiding at least gas contained in the compositions from a branch unit provided in a flow path of the compositions to guide the gas accumulated above the branch unit to an outside.

29. A battery material manufacturing method comprising:
respectively, separately, continuously receiving a plurality of compositions in a fluid form, the compositions including each of a thermoplastic polymer and a conductive filler, as at least the same composition;
guiding the compositions injected, in an output direction while spreading each of the compositions in an orthogonal direction relative to the output direction;
coupling the plurality of compositions in layers and guiding the plurality of compositions in the output direction; and
continuously outputting, as an output product, the plurality of compositions integrated by being subjected to spreading and coupling;
wherein the battery material manufacturing method comprises any one of the steps of:
rolling the output product in a sheet shape that is output, by sandwiching a front and a back of the output product;
stretching by pulling and reeling out the output product in the sheet shape that is output at a first speed and outputting the output product in the output direction at a second speed faster than the first speed; and
casting by receiving the output product in the sheet shape output at a third speed and reeling out the output product while winding the output product and outputting the output product in the output direction at a fourth speed faster than the third speed.

30. A battery material manufacturing system comprising:
a battery material manufacturing apparatus including:
a plurality of reception ports configured to respectively, separately, continuously receive compositions in a fluid form having at least the same composition;
spreading units configured to guide the compositions injected, in an output direction while spreading each of the compositions in an orthogonal direction relative to the output direction;
a coupling unit configured to couple the plurality of compositions in layers and guide the plurality of compositions in the output direction; and
an output port as a slit-shaped opening that can continuously output, as an output product, the plurality of compositions integrated by being subjected to spreading and coupling; and
an extruder configured to pump the compositions by controlling an output pressure for each of the reception ports,
wherein the battery material manufacturing system further comprises any one of:
a cast block including:
a cast roller configured to reel out the output product in a sheet shape output from the output port at a first speed while winding the output product; and
a rotationally driving unit configured to rotationally drive the cast roller so as to output the output product at a second speed faster than the first speed;
a rolling apparatus configured to roll the output product in the sheet shape received, by sandwiching a front and a back of the output product; and
a stretching apparatus including:
a stretching roller configured to pull and reel out the output product in the sheet shape received; and
a rotationally driving unit configured to rotationally drive the stretching roller so as to output the output product at a third speed faster than the first speed or the second speed.

31. The battery material manufacturing system according to claim 30, comprising a combination of two or more of groups composed of the cast block, the rolling apparatus, and the stretching apparatus for gradually processing the output product in the sheet shape output from the output port.
